(19) Europäisches Patentamt
European Patent Office
Office européen des brevets

(11) **EP 3 867 035 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **19786432.5**

(22) Anmeldetag: **10.10.2019**

(51) Internationale Patentklassifikation (IPC):
*B29C 44/34* (2006.01)   *C08J 9/12* (2006.01)
*C08J 9/14* (2006.01)   *C08J 9/18* (2006.01)

(52) Gemeinsame Patentklassifikation (CPC):
**B29C 44/3453; B29C 44/3461; C08J 9/12; C08J 9/122; C08J 9/141; C08J 9/18;**
B29K 2023/12; B29K 2025/06; C08J 2203/06; C08J 2203/14

(86) Internationale Anmeldenummer:
**PCT/EP2019/025339**

(87) Internationale Veröffentlichungsnummer:
**WO 2020/078583 (23.04.2020 Gazette 2020/17)**

(54) **VERFAHREN ZUM IMPRÄGNIEREN VON POLYMERGRANULAT**

METHOD FOR IMPREGNATING POLYMER GRANULATE

PROCÉDÉ D'IMPRÉGNATION DES GRANULES DE POLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2018 EP 18020498**
**31.10.2018 DE 102018008534**

(43) Veröffentlichungstag der Anmeldung:
**25.08.2021 Patentblatt 2021/34**

(73) Patentinhaber: **Linde GmbH**
**82049 Pullach (DE)**

(72) Erfinder:
• **HENINGER, Rolf**
**85635 Höhenkirchen-Siegertsbrunn (DE)**
• **PRALLER, Andreas**
**82110 Germering (DE)**
• **SZYCH, Pawel**
**81241 München (DE)**

(74) Vertreter: **Lu, Jing**
**Linde GmbH**
**Intellectual Property EMEA**
**Dr.-Carl-von-Linde-Straße 6-14**
**82049 Pullach (DE)**

(56) Entgegenhaltungen:
**EP-A1- 0 095 109      EP-A2- 0 258 669**
**WO-A1-2017/220671    DE-A1-102005 013 040**
**GB-A- 2 034 322**

**Beschreibung**

Die Erfindung betrifft ein Verfahren zum Imprägnieren von Polymergranulat.

Ein Polymergranulat wird mit einem Treibmittel imprägniert, bevor das derartig behandelte Polymergranulat für die Herstellung eines Bauteils, beispielsweise durch die Spritzgusstechnik, verwandt wird.

Unter dem Begriff "imprägnieren" ist zu verstehen, dass das Treibmittel von dem Polymergranulat absorbiert wird. Das Treibmittel wird dabei zumindest teilweise vom Polymergranulat aufgenommen bzw. an dieses gebunden. Dies kann auch als Beladen des Polymergranulates mit dem Treibmittel bezeichnet werden. Wie viel Treibmittel in Relation zum Polymergranulat vom Polymergranulat absorbiert wurde, wird auch als "Grad der Beladung" bezeichnet.

Nach dem Stand der Technik sind Verfahren zum Imprägnieren eines Polymergranulates bekannt, bei denen ein Polymergranulat mit dem Treibmittel bei einem vordefinierten Druck und einer vordefinierten Temperatur für eine vorgegebene Zeit imprägniert wird. Die vorgegebene Zeit, der vordefinierte Druck und die vordefinierte Temperatur basieren beispielsweise auf zuvor durchgeführten Versuchsreihen.

Einige Verfahren des Stands der Technik weisen vor dem Imprägnieren einen zusätzlichen Vorbereitungsschritt ("*conditioning*") auf, bei dem das Polymergranulat vorbehandelt wird und dabei beispielsweise auf eine bestimmte Temperatur temperiert wird. Dies erfordert eine zusätzliche Vorrichtung für das Durchführen des Vorbereitungsschrittes. Zudem erhöht sich der Zeitaufwand gegenüber einem Verfahren, bei dem kein Vorbereitungsschritt durchgeführt wird.

Bei einer Vielzahl von Verwendungen eines imprägnierten Polymergranulates ist ein bestimmter Grad der Beladung vorgesehen.

Bei den Verfahren, die aus dem Stand der Technik bekannt sind, ist während des Vorgangs des Imprägnierens nicht bekannt, wie viel Treibmittel vom Polymergranulat aufgenommen wurde, d.h. während des Verfahrens ist der Grad der Beladung nicht bekannt. Um die entsprechenden Bedingungen für einen bestimmten Grad der Beladung zu bestimmen, sind aufwendige Versuchsreihen notwendig. Dennoch kann das Polymergranulat nach der vorgegebenen Zeit des Imprägnierens einen Grad der Beladung aufweisen, der niedriger oder höher als der gewünschte Grad der Beladung ist. Dies kann beispielsweise daran liegen, dass die Versuchsreihen nicht ausführlich genug sind oder daran, dass das Polymergranulat eine andere Anfangsbedingung, z.B. eine andere Temperatur, aufweist als bei den Versuchsreihen. Um letzterem entgegenzuwirken, kann das Polymergranulat vor dem Imprägnieren zumindest einem Vorbehandlungsschritt ausgesetzt werden.

WO 2017/220671 A1 offenbart Verfahren gemäß den Oberbegriffen das Anspruchs 1 und des Anspruchs 5.

Es ist ein Verfahren von Interesse, bei dem der Grad der Beladung während des Imprägnierens bestimmt werden kann.

Diese Aufgabe wird durch ein Verfahren zum Imprägnieren eines Polymergranulates mit einer vordefinierten Masse eines gasförmigen Treibmittels nach Anspruch 1 oder ein Verfahren zum Imprägnieren eines Polymergranulates mit einer vordefinierten Masse eines gasförmigen Treibmittels nach Anspruch 5 gelöst. Vorteilhafte Ausgestaltungen der Verfahren sind in den entsprechenden Unteransprüchen angegeben.

Ein erster Aspekt der Erfindung betrifft ein Verfahren zum Imprägnieren eines Polymergranulates mit einer vordefinierten Masse eines gasförmigen Treibmittels. Dabei wird das Polymergranulat in einem Innenraum eines Druckbehälters angeordnet und ein gasförmiges Treibmittel initial in den Innenraum des Druckbehälters eingeleitet. Das Treibmittel wird vom Polymergranulat absorbiert und ein im Innenraum herrschender momentaner Druck $p_2$ bestimmt. Dabei wird eine momentane Masse $\Delta m$ des durch das Polymergranulat absorbierten Treibmittels als Differenz der Masse $m_1$ des insgesamt initial in den Innenraum des Druckbehälters eingeleiteten Treibmittels und der Masse $m_2$ eines momentan im Innenraum befindlichen nicht-absorbierten Teils des Treibmittels bestimmt. Das Verfahren wird abgebrochen, wenn die momentane Masse des absorbierten Treibmittels größer oder gleich der vordefinierten Masse ist.

Der Druckbehälter kann ein Autoklav sein.

Der momentane Druck kann mithilfe zumindest eines Drucksensors im Innenraum des Druckbehälters bestimmt werden, insbesondere gemessen werden. Der zumindest eine Drucksensor kann Druckdaten aufnehmen. In einer Ausführungsform des erfindungsgemäßen Verfahrens kann der zumindest eine Drucksensor die aufgenommenen Druckdaten zur weiteren Verwendung zur Verfügung stellen.

Weiterhin kann der momentane Druck wiederholt während der Absorption des Treibmittels gemessen werden. In einer Ausführungsform des Verfahrens kann der momentane Druck kontinuierlich bestimmt werden.

Unter Verwendung der initial eingeleiteten Masse und des momentanen Drucks kann die nicht-absorbierte Masse des Treibmittels berechnet werden. Die Differenz zwischen der initial eingeleiteten Masse und der nicht-absorbierten Masse ergibt die momentane Masse des durch das Polymergranulat absorbierten Treibmittels. Das bedeutet, dass die momentane Masse des durch das Polymergranulat absorbierten Treibmittels unter Verwendung von physikalischen Größen, die einfach messbar sind, berechnet werden kann.

Ein Vorteil dieses erfindungsgemäßen Verfahrens ist, dass die momentane Masse des absorbierten Treibmittels bestimmt werden kann, insbesondere während des Vorgangs des Imprägnierens bestimmt werden kann. Sobald die momentane Masse des absorbierten Treibmittels größer oder gleich der vordefinierten Masse ist, kann das Imprägnieren abgebrochen, d.h. beendet, werden. Das bedeutet mit anderen Worten, dass während des Imprägnierens der Grad der Beladung bestimmt und das Imprägnieren beendet werden kann, sobald ein vordefinierter Grad der Beladung erreicht ist. In einer Ausführungsform des Verfahrens wird das Verfahren automatisch beendet, wenn die momentane Masse des absorbierten Treibmittels größer oder gleich der vordefinierten Masse ist.

Ferner sind weder eine Vorbehandlung des Polymergranulates noch zuvor ausgeführte Versuchsreihen notwendig, so dass durch das Verfahren sowohl ein zeitlicher also auch ein finanzieller Vorteil erreicht werden kann.

Gemäß einer Ausführungsform des Verfahrens wird eine momentane Temperatur $T_2$ im Innenraum des Druckbehälters gemessen.

Die momentane Temperatur ist die momentan im Innenraum des Druckbehälters herrschende Temperatur.

Die momentane Temperatur $T_2$ kann mithilfe zumindest eines Temperatursensors im Innenraum des Druckbehälters gemessen werden. In einer Ausführungsform kann die momentane Temperatur wiederholt gemessen werden. In einer Ausführungsform kann die momentane Temperatur kontinuierlich gemessen werden.

Der zumindest eine Temperatursensor kann dazu ausgebildet sein, Temperaturdaten aufzunehmen. Gemäß einer Ausführungsform kann der zumindest eine Temperatursensor die aufgenommenen Temperaturdaten zur weiteren Verwendung zur Verfügung stellen.

Auf eine Messung der Temperatur kann verzichtet werden, wenn ihr Einfluss auf die Bestimmung der absorbierten Treibmittelmenge als vernachlässigbar oder die Temperatur im Druckbehälter als konstant angesehen werden kann, etwa durch eine ausreichend gute thermische Isolation.

Das bedeutet mit anderen Worten, dass zur Bestimmung der absorbierten Menge des Treibmittels zumindest bei einem nicht-ausreichend isolierten Druckbehälter die momentane Temperatur im Innenraum des Druckbehälters gemessen werden muss, um den Einfluss der Temperatur zu berücksichtigen.

Nach einer Ausführungsform des Verfahrens wird die momentane Masse mittels einer speicherprogrammierbaren Steuerung bestimmt.

In einer Ausführungsform ist die speicherprogrammierbare Steuerung derart konfiguriert, dass sie unter Verwendung der Druckdaten oder der Druck- und der Temperaturdaten die momentane Masse berechnen kann.

Gemäß einer Ausführungsform kann die speicherprogrammierbare Steuerung die momentane Masse kontinuierlich unter Verwendung des momentanen Druckes oder des momentanen Druckes und der momentanen Temperatur berechnen.

Wenn die berechnete momentane Masse des absorbierten Treibmittels größer oder gleich einer vordefinierten Masse ist, wird das Verfahren des Imprägnierens abgebrochen bzw. beendet.

Ein Vorteil dieser Ausführungsform ist, dass die momentane Masse des absorbierten Treibmittels automatisch kontinuierlich berechnet wird, so dass jederzeit der Grad der Beladung bestimmt werden kann. Der Prozess des Imprägnierens kann sofort beendet werden, wenn der vordefinierte Grad der Beladung erreicht ist, d.h. wenn die berechnete momentane Masse des absorbierten Treibmittels größer oder gleich einer vordefinierten Masse ist.

Gemäß einer Ausführungsform ist das Verfahren dadurch gekennzeichnet, dass die Masse des momentan im Innenraum befindlichen nicht-absorbierten Teils des Treibmittels (m) mittels der Beziehung:

$$m_1 = \frac{p_1 \cdot V}{R_s \cdot T_1}$$

bestimmt wird.

Dabei ist $p_1$ und $T_1$ ein im Innenraum vor der Absorption des Treibmittels herrschender Anfangsdruck und eine im Innenraum vor der Absorption des Treibmittels herrschende Anfangstemperatur. Die Masse $m_1$ bezeichnet die Masse des insgesamt initial in den Innenraum des Druckbehälters eingeleiteten Treibmittels.

V ist ein Volumen des Treibmittels im Druckbehälter, das aus der Differenz eines Volumens des Innenraums des Druckbehälters und eines Volumens des im Innenraum angeordneten Polymergranulates bestimmt werden kann. Das Volumen des im Innenraum angeordneten Polymergranulates ist dabei ein Volumen, welches durch das Polymergranulat im Innenraum des Druckbehälters eingenommen wird.

$R_S$ entspricht der spezifischen Gaskonstante des im leeren Volumen befindlichen Gases oder Gasgemisches, das z.B. aus dem Treibmittel und Luft bestehen kann. Vereinfachend kann man davon ausgehen, dass für Rs die spezifische Gaskonstante des Treibmittels verwendet wird.

Die im Polymergranulat absorbierte Treibmittelmenge kann durch Bestimmung des aktuell im Druckbehälter herrschenden Drucks $p_2$ und der Temperatur $T_2$ berechnet werden über die Beziehung:

$$\Delta m = \frac{V}{R_s} \left( \frac{p_1}{T_1} - \frac{p_2}{T_2} \right)$$

$T_1$ und $T_2$ können hierbei den Mittelwert aus verschiedenen Temperarturmessstellen im Druckbehälter darstellen.

Die Anfangstemperatur $T_1$ liegt insbesondere in einem Bereich zwischen 0°C und 180°C, insbesondere zwischen 10°C und 120°C. Der Anfangsdruck $p_1$ liegt insbesondere zwischen 80bar und 5bar, insbesondere zwischen 45bar und 30bar.

In einer alternativen Ausführungsform wird die Masse des initial in den Innenraum des Druckbehälters eingeleiteten Treibmittels beim Einleiten des Treibmittels bestimmt.

Die Masse des momentan im Innenraum befindlichen nicht-absorbierten Teils des Treibmittels kann daher vorteilhaft unter Verwendung einfach bestimmbarer physikalischer Größen bestimmt werden.

Ein weiterer Aspekt der Erfindung betrifft ein Verfahren zum Imprägnieren eines Polymergranulates mit einer vordefinierten Masse eines gasförmigen Treibmittels, wobei das Polymergranulat in einem Innenraum eines Druckbehälters angeordnet wird. Ein gasförmiges Treibmittel wird initial in den Innenraum des Druckbehälters eingeleitet, so dass Treibmittel vom Polymergranulat absorbiert wird. Hiernach wird nachträglich Treibmittel in den Innenraum des Druckbehälters nachgefüllt, wobei die Massen des initial $m_1$ und des nachträglich eingeleiteten Treibmittels $\Delta m_a$ bestimmt werden. Eine momentane Masse $\Delta m$ des durch das Polymergranulat absorbierten Treibmittels wird unter Verwendung der Massen des initial und nachträglich in den Innenraum eingeleiteten Treibmittels bestimmt. Das Verfahren wird abgebrochen, wenn die momentane Masse des absorbierten Treibmittels größer oder gleich der vordefinierten Masse ist.

Der Druckbehälter ist beispielsweise ein Autoklav.

Der momentane Druck kann mithilfe zumindest eines Drucksensors im Innenraum des Druckbehälters bestimmt werden. Der zumindest eine Drucksensor kann Druckdaten aufnehmen. In einer Ausführungsform des erfindungsgemäßen Verfahrens können die aufgenommenen Druckdaten zur weiteren Verwendung zur Verfügung gestellt werden.

Der momentane Druck kann wiederholt während der Absorption des Treibmittels gemessen werden. In einer Ausführungsform des Verfahrens kann der momentane Druck kontinuierlich bestimmt werden.

Die momentane Masse des absorbierten Treibmittels kann während des Vorgangs des Imprägnierens bestimmt werden kann. Sobald die momentane Masse des absorbierten Treibmittels größer oder gleich der vordefinierten Masse ist, kann das Imprägnieren abgebrochen werden. Mit anderen Worten heißt das, dass während des Imprägnierens der Grad der Beladung bestimmt werden kann. Das Imprägnieren kann abgebrochen werden, sobald ein vordefinierter Grad der Beladung erreicht ist, d.h. dass der Vorgang des Imprägnierens sofort beendet werden kann, wenn der vordefinierte Grad der Beladung erreicht ist.

In einer Ausführungsform des Verfahrens wird das Verfahren automatisch abgebrochen, wenn die momentane Masse des absorbierten Treibmittels größer oder gleich der vordefinierten Masse ist.

Gemäß einer Ausführungsform des Verfahrens wird eine momentane Temperatur $T_2$ im Innenraum des Druckbehälters gemessen.

Dabei ist die momentane Temperatur die momentan im Innenraum des Druckbehälters herrschende Temperatur.

Die momentane Temperatur $T_2$ kann mithilfe zumindest eines Temperatursensors im Innenraum des Druckbehälters gemessen werden. In einer Ausführungsform kann die momentane Temperatur wiederholt bestimmt werden. In einer Ausführungsform kann die momentane Temperatur kontinuierlich gemessen werden.

Der zumindest eine Temperatursensor kann dazu ausgebildet sein, Temperaturdaten aufzunehmen. Nach einer Ausführungsform des Verfahrens kann der zumindest eine Temperatursensor die aufgenommenen Temperaturdaten zur weiteren Verwendung zur Verfügung stellen.

Gemäß einer Ausführungsform ist das Verfahren dadurch gekennzeichnet, dass der im Innenraum herrschende momentane Druck $p_2$ gemessen wird und das jeweils nachträglich eingeleitete Treibmittel kontinuierlich in den Innenraum eingeleitet wird, so dass der im Innenraum herrschende Druck konstant bleibt.

Mit anderen Worten bedeutet das, dass kontinuierlich nachträglich Treibmittel in den Druckbehälter eingeleitet wird, so dass der im Innenraum des Druckbehälters herrschende Druck konstant bleibt.

Vor der Absorption des Treibmittels herrscht im Innenraum des Druckbehälters ein Anfangsdruck ($p_1$). In einer Ausführungsform des Verfahrens wird derart nachträglich Treibmittel eingeleitet, dass der momentan herrschende Druck gleich dem Anfangsdruck ist.

Das Treibmittel kann nachträglich mithilfe eines Druckreglers in den Innenraum des Druckbehälters eingeleitet werden.

Vorteilhaft an dieser Ausführungsform des Verfahrens ist, dass der im Innenraum herrschende Druck konstant bleibt und somit die Bedingungen des Imprägnierens stabil bleiben.

In einer alternativen Ausführungsform wird der im Innenraum herrschende momentane Druck $p_2$ gemessen und das jeweils nachträglich eingeleitete Treibmittel in regelmäßigen Intervallen in den Innenraum eingeleitet, so dass der nach dem jeweiligen Intervall im Innenraum herrschende Druck konstant ist.

In einer Ausführungsform ist der nach dem jeweiligen Intervall im Innenraum herrschende Druck gleich dem Anfangsdruck.

Gemäß einer Ausführungsform wird nachträglich Treibmittel in den Innenraum des Druckbehälters eingeleitet, wenn die Differenz zwischen dem nach dem jeweiligen Intervall im Innenraum herrschende Druck und dem momentan herrschenden Druck $p_2$ betragsmäßig insbesondere größer ist als 1 bar, insbesondere größer als 0,5 bar, insbesondere größer als 0,1 bar.

Nach einer weiteren Ausführungsform des Verfahrens wird die momentane Masse ($\Delta$m) des durch das Polymergranulat absorbierten Treibmittels mittels der Beziehung

$$\Delta m = \Delta m_a + \frac{V}{R_s}\left(\frac{p_1}{T_1} - \frac{p_2}{T_2}\right)$$

bestimmt.

Dabei ist $\Delta m_a$ die Masse des nachträglich in den Druckbehälter eingeleiteten Treibmittels. $T_1$ ist eine im Innenraum vor der Absorption des Treibmittels herrschende Anfangstemperatur und $T_2$ ist die momentane Temperatur im Innenraum des Druckbehälters. $p_1$ ist der vor der Absorption und $p_2$ der momentan herrschende Druck im Druckbehälter.

Sofern man davon ausgehen kann, dass die Temperatur und der Druck im Druckbehälter während der Imprägnierung annähernd unverändert bleiben (d.h. es gilt $T_1 = T_2$ und $p_1 = p_2$) entspricht die absorbierte Menge des Treibmittels der Menge des nachträglich eingeleiteten Treibmittels, d.h. $\Delta m = \Delta m_a$.

In einer Ausführungsform kann die Masse des nachträglich in den Druckbehälter eingeleiteten Treibmittels mithilfe eines Massendurchflussmessers gemessen werden. In einer alternativen Ausführungsform kann die Masse des nachträglich in den Druckbehälter eingeleiteten Treibmittels bestimmt werden aus einer Änderung einer Gesamtmasse vom Druckbehälter mit dem im Innenraum befindlichen Polymergranulat und dem Treibmittel.

Das bedeutet, dass die momentane Masse unter Verwendung einfach bestimmbarer Messgrößen wie den Massen des initial und des nachträglich in den Druckbehälter eingeleiteten Treibmittels bestimmt werden kann.

Eine Ausführungsform des Verfahrens ist dadurch charakterisiert, dass der im Innenraum herrschende momentane Druck gemessen wird. Ferner wird die momentane Masse $\Delta m$ des durch das Polymergranulat absorbierten Treibmittels unter Verwendung der Massen des initial und nachträglich in den Innenraum eingeleiteten Treibmittels und des momentanen Drucks $p_2$ bestimmt. Das Verfahren wird abgebrochen, wenn die momentane Masse $\Delta m$ des absorbierten Treibmittels größer oder gleich der vordefinierten Masse ist.

In einer Ausführungsform kann die momentane Masse wiederholt bestimmt werden. In einer alternativen Ausführungsform kann die momentane Masse kontinuierlich bestimmt werden.

Gemäß einer Ausführungsform des Verfahrens wird eine momentane Temperatur $T_2$ im Innenraum des Druckbehälters gemessen.

Dabei ist die momentane Temperatur die momentan im Innenraum des Druckbehälters herrschende Temperatur.

Die momentane Temperatur $T_2$ kann mithilfe zumindest eines Temperatursensors im Innenraum des Druckbehälters gemessen werden. In einer Ausführungsform kann die momentane Temperatur wiederholt bestimmt werden. In einer Ausführungsform kann die momentane Temperatur kontinuierlich gemessen werden.

Der zumindest eine Temperatursensor kann dazu ausgebildet sein, Temperaturdaten aufzunehmen. Nach einer Ausführungsform des Verfahrens kann der zumindest eine Temperatursensor die aufgenommenen Temperaturdaten zur weiteren Verwendung zur Verfügung stellen.

Gemäß einer Ausführungsform des Verfahrens wird die momentane Masse $\Delta m$ des durch das Polymergranulat absorbierten Treibmittels mittels der Beziehung:

$$\Delta m = \Delta m_a + \frac{V}{R_s}\cdot\left(\frac{p_1}{T_1} - \frac{p_2}{T_2}\right)$$

bestimmt.

Dabei sind $p_1$ und $T_1$ ein im Innenraum vor der Absorption des Treibmittels herrschender Anfangsdruck und eine im Innenraum vor der Absorption des Treibmittels herrschende Anfangstemperatur. $p_2$ und $T_2$ sind der gemessene momentane Druck und die gemessene momentane Temperatur im Innenraum des Druckbehälters. $\Delta m_a$ ist die Masse des nachträglich in den Druckbehälter eingeleiteten Treibmittels. V ist das Behältervolumen, das nicht vom Polymergranulat eingenommen wird. Rs ist die spezifische Gaskonstante des Gases oder Gasgemischs, wobei vereinfachend davon ausgegangen werden kann, dass sie im Verlauf der Imprägnierung nahezu konstant bleibt.

Gemäß einer Ausführungsform des Verfahrens wird die Masse des initial in den Innenraum des Druckbehälters eingeleiteten Treibmittels, die nachträglich eingeleitete Masse $\Delta m_a$ oder die initial und die nachträglich eingeleiteten Massen $m_1$, $\Delta m_a$ des Treibmittels beim Einleiten des Treibmittels in den Innenraum des Druckbehälters mithilfe eines Massendurchflussmessers bestimmt.

Ein geeigneter Massendurchflussmesser ist z.B. ein Coriolis-Massendurchflussmesser, es kann aber auch ein anderes Messprinzip verwendet werden.

Mithilfe eines Massendurchflussmessers kann auf einfache Weise die Masse des initial und/oder nachträglich in den Innenraum des Druckbehälters eingeleiteten Treibmittels gemessen werden.

Gemäß einer Ausführungsform des Verfahrens wird die Masse des initial in den Innenraum des Druckbehälters eingeleiteten Treibmittels, die nachträglich eingeleitete Masse $\Delta m_a$ oder die initial und die nachträglich eingeleiteten Massen $m_1$, $\Delta m_a$ des Treibmittels mithilfe einer Waage, einer Wägezelle oder eines Kraftaufnehmers bestimmt.

Es kann eine Anfangsgesamtmasse vom Druckbehälter mit dem im Innenraum befindlichen Polymergranulat bestimmt werden. Insbesondere kann mittels einer Waage, einer Wägezelle oder eines Kraftaufnehmers eine Gesamtmasse vom Druckbehälter mit dem im Innenraum befindlichen Polymergranulat und dem Treibmittel bestimmt werden. Die Bestimmung der Gesamtmasse kann wiederholt erfolgen, so dass eine momentane Gesamtmasse gemessen werden kann.

Die Masse des initial in den Druckbehälters eingeleiteten Treibmittels kann aus der Differenz der Anfangsgesamtmasse und der Gesamtmasse vor Beginn des Imprägnierens bestimmt werden.

Die nachträglich eingeleitete Masse des Treibmittels kann aus einer Änderung der Gesamtmasse bestimmt werden.

Nach einer weiteren Ausführungsform des Verfahrens ist das gasförmige Treibmittel einer der folgenden gasförmigen Stoffe oder weist zumindest einen der folgenden Stoffe auf: Kohlendioxid ($CO_2$), Stickstoff ($N_2$), Argon (Ar), Helium (He), oder ein Kohlenwasserstoff, Butan, Pentan, Mischungen eines oder mehrerer Gase mit $CO_2$.

Ein Kohlenwasserstoff kann beispielsweise Butan oder Pentan sein.

Gemäß der Erfindung kann das Treibmittel eine Mischung eines oder mehrerer gasförmiger Stoffe mit Kohlendioxid sein.

Gemäß einer Ausführungsform ist das Verfahren dadurch gekennzeichnet, dass das Polymergranulat zumindest eines der folgenden Stoffe aufweist oder durch einen der folgenden Stoffe gebildet ist: einen thermoplastischen Kunststoff, einen duroplastischen Kunststoff, einen thermoplastischen Partikelschaum, ein Granulat zur Herstellung eines thermoplastischen Partikelschaumes, Polypropylen, expandiertes Polypropylen (EPP), Polystyrol, expandiertes Polystyrol (EPS).

Das Polymergranulat kann insbesondere ein hydrophiles Material aufweisen oder aus einem hydrophilen Material bestehen.

Nach einer weiteren Ausführungsform des Verfahrens wird zum Beenden des Imprägnierens des Polymergranulates der im Innenraum des Druckbehälters herrschende Druck abgesenkt.

Nach einer Ausführungsform wird bei oder nach dem Erreichen der vordefinierten Masse der Druck im Druckbehälter abgesenkt, um eine weitere Aufnahme von Treibmittel im Polymergranulat zu verhindern. Dies geschieht beispielsweise durch ein Ablassen des nicht-absorbierten Treibmittels über ein Entlastungsventil in die Umgebung, wobei der Druck in der Regel z.B. auf Normaldruck abgesenkt wird.

Als Folge gibt das Polymergranulat kontinuierlich absorbiertes Treibmittel wieder ab. Die aus dem Polymergranulat entwichene Treibmittelmenge kann bei weiterhin geöffnetem Entlastungsventil einfach über die Abnahme der Gesamtmasse des Druckbehälters mit darin befindlichen Polymergranulat und Treibmittel bestimmt werden.

Alternativ kann der Druck auf einen höheren Wert als den Umgebungsdruck gesenkt und dann das Entlastungsventil wieder geschlossen werden. Die aus dem Polymergranulat entwichene Masse des Treibmittels $\Delta m_2$ kann über die Formel

$$\Delta m_2 = \frac{V}{R_s} \cdot \left( \frac{p_4}{T_4} - \frac{p_3}{T_3} \right)$$

ermittelt werden. Dabei sind $T_3$ die Temperatur und $p_3$ der Druck im Innenraum des Druckbehälters und $m_3$ die Masse des im Gasvolumen des Druckbehälters enthaltene Treibmittel, d.h. nicht-absorbiertes Treibmittel, zum Zeitpunkt des Schließens des Entlastungsventils. $T_4$ und $p_4$ sind eine Temperatur und ein Druck im Innenraum des Druckbehälters zu einem späteren Zeitpunkt. In einer vorteilhaften Ausführungsform lässt sich ein Druck $p_3$ einstellen, bei dem kein Treibmittel aus dem Polymergranulat entweicht. Das bedeutet, dass das imprägnierte Polymergranulat beliebig lange vor der Weiterverarbeitung gelagert werden kann, wobei der Grad der Beladung erhalten bleibt.

Gemäß dem erfindungsgemäßen Verfahren kann während des Imprägnierens der Grad der Beladung, d.h. die Menge des durch das Polymergranulat absorbierten Treibmittels, bestimmt werden.

Weitere Merkmale und Vorteile der Erfindung werden nachfolgend anhand der Figurenbeschreibung von Ausführungsbeispielen erläutert. Es zeigen:

| Figuren 1A und 1B | eine Veranschaulichung des Verfahrens, bei dem kein zusätzliches Treibmittel in den Druckbehälter nachgefüllt wird, |
|---|---|
| Figuren 2A und 2B | eine Veranschaulichung des Verfahrens, bei dem zusätzlich Treibmittel in den Druckbehälter nachgefüllt wird, der Druck konstant gehalten wird und dem Anfangsdruck entspricht, und |
| Figuren 3A und 3B | eine Veranschaulichung des Verfahrens, bei dem zusätzlich Treibmittel in den Druckbehälter nachgefüllt wird, der Druck nach unten aber begrenzt wird und vom Anfangsdruck abweicht. |

Mithilfe des erfindungsgemäßen Verfahrens kann das Ende des Imprägnationsprozesses bestimmt werden, indem die Masse des vom Polymergranulat absorbierten Treibmittels ermittelt wird. Es kann eine Zielsetzung der Imprägnation vorgegeben werden, d.h. der zu erreichende Grad der Beladung, und der Prozess des Imprägnierens kann abgebrochen werden, wenn diese Zielsetzung erreicht ist. Dazu wird insbesondere bestimmt, wie viel Treibmittel momentan durch das Polymergranulat absorbiert wurde, indem:

1. im Druckbehälter eine momentane Temperatur bestimmt wird, sowie eine Änderung eines Druckes im Bezug zu einem Anfangsdruck, und/oder

2. eine Masse des Treibmittels bestimmt wird, die nachträglich in den Druckbehälter nachgefüllt wird.

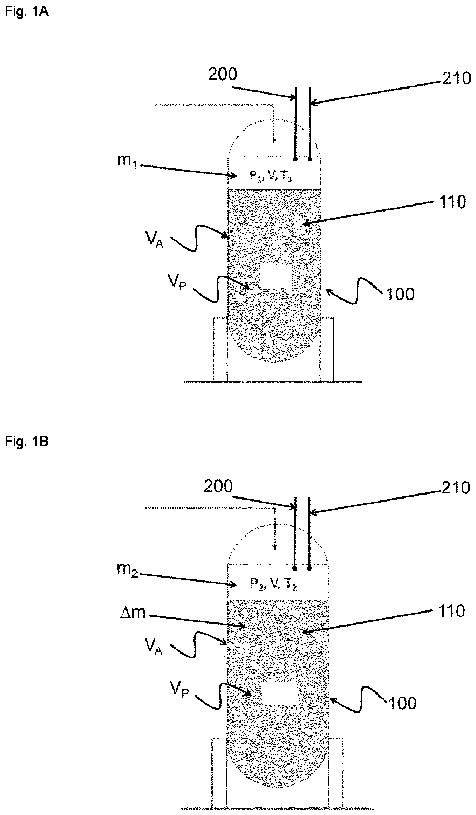

Die Figuren 1A und 1B veranschaulichen eine Ausführungsform des erfindungsgemäßen Verfahrens, bei dem eine initiale Menge Treibgas $m_1$, beispielsweise $CO_2$, in einen Innenraum eines Druckbehälters 100 eingeleitet wurde, in dem ein Polymergranulat 110 angeordnet ist, und im Druckbehälter 100 eine momentane Temperatur $T_2$ bestimmt wird, sowie eine Änderung eines Druckes im Bezug zu einem Anfangsdruck $p_1$. Dabei zeigt Fig. 1A den Zustand vor dem Beginn des Imprägnierens (Anfangsbedingung) und Fig. 1B den Zustand während des Imprägnierens.

Beispielsweise kann mithilfe des erfindungsgemäßen Verfahrens ein Grad der Beladung von 2% erreicht werden. Das bedeutet, dass die Zielsetzung ein Grad der Beladung von 2% ist und der Prozess beendet werden kann wenn bzw. nachdem diese Zielsetzung erreicht worden ist. Ein Grad der Beladung von 2% bedeutet, dass die Masse des Polymergranulates durch eine Absorption des Treibmittels um 2% ansteigt. Ist z. B. Polymergranulat mit einer Masse von 100kg im Innenraum des Druckbehälters 100 angeordnet, so muss für einen Grad der Beladung von 2% eine Masse von 2kg des Treibmittels durch das Polymergranulat 110 absorbiert werden.

Unter der Voraussetzung, dass die allgemeine Gasgleichung

$$p \cdot V = n \cdot R \cdot T$$

mit

$$R_S = \frac{R}{M}$$

gilt, so gilt:

$$p \cdot V = m \cdot R_S \cdot T$$

wobei

m die Masse des Gases, insbesondere des Treibmittels,
M die molare Masse des Gases, insbesondere des Treibmittels,
R die universelle Gaskonstante und
$R_S$ die spezifische Gaskonstante ist.

Am Anfang des Prozesses des Imprägnierens gehorcht das Treibmittel, beispielsweise $CO_2$, der Gleichung:

$$p_1 \cdot V = m_1 \cdot R_S \cdot T_1.$$

Dabei ist

$p_1$ der Druck im Innenraum des Druckbehälters 100 vor Beginn des Absorptionsprozesses, der auch als Anfangsdruck bezeichnet werden kann,

$T_1$ die Temperatur im Innenraum des Druckbehälters 100 vor Beginn des Absorptionsprozesses, die auch als Anfangstemperatur bezeichnet werden kann,

V das Volumen des Treibmittels im Innenraum des Druckbehälters 100, wobei das Volumen V des Treibmittels im Innenraum des Druckbehälters als eine Differenz zwischen einem Volumen des Innenraums des Druckbehälters $V_A$ und einem Volumen des im Innenraum angeordneten Polymergranulates Vp beschrieben werden kann, und

Rs die spezifische Gaskonstante ist, für die gilt: $$R_s = \frac{R}{M}.$$

Der Anfangsdruck $p_1$ und die Anfangstemperatur $T_1$ können gemessen werden, beispielsweise mithilfe mindestens eines Drucksensors 210 und eines Temperatursensors 200 im Innenraum des Druckbehälters 100. Die Volumina $V_A$ und Vp können bestimmt werden, so dass das Volumen V des Treibmittels im Innenraum des Druckbehälters 100 bestimmt werden kann. Die spezifische Gaskonstante des Treibmittels ist bekannt oder kann berechnet werden.
Damit kann die Masse $m_1$ berechnet werden mittels der Beziehung:

$$m_1 = \frac{p_1 \cdot V}{R_S \cdot T_1}.$$

In einer alternativen Ausführungsform kann die Masse $m_1$ beim Einfüllen in den Druckbehälter 100 mithilfe eines Massendurchflussmessers gemessen werden.
Während des Imprägnierens werden eine momentane Temperatur $T_2$ und ein momentaner Druck $p_2$ im Innenraum des Druckbehälters 100 bestimmt. In einer Ausführungsform werden der momentane Druck $p_2$ und die momentane Temperatur $T_2$ kontinuierlich bestimmt. Der momentane Druck $p_2$ kann beispielsweise mithilfe mindestens eines Drucksensors 210 im Innenraum des Druckbehälters 100 gemessen werden. Die momentane Temperatur $T_2$ kann mittels zumindest eines Temperatursensors 200 im Innenraum des Druckbehälters 100 gemessen werden. Während des Imprägnierens wird zumindest eine Teilmenge des Treibmittels vom Polymergranulat 110 absorbiert. Im Vergleich zum Anfangsdruck $p_1$ sinkt der momentane Druck $p_2$ ab. Die momentane Temperatur $T_2$ kann sich von der Anfangstemperatur $T_1$ unterscheiden. Das Volumen des Treibmittels im Innenraum des Druckbehälters V bleibt unverändert im Vergleich zum Volumen V des Treibmittels im Innenraum des Druckbehälters 100 vor Beginn der Absorption.
Nach einer gewissen Zeitspanne, in der zumindest eine Teilmenge des Treibmittels vom Polymergranulat 110 gebunden wurde, gilt:

$$p_2 \cdot V = m_2 \cdot R_S \cdot T_2.$$

Die Masse $m_2$ beschreibt dabei die Masse des Treibmittels im Innenraum des Druckbehälters 100 bei der momentanen Temperatur $T_2$ und dem momentanen Druck $p_2$, die nicht vom Polymergranulat 110 absorbiert wurde und lässt sich berechnen zu

$$m_2 = \frac{p_2 \cdot V}{T_2 \cdot R_s}$$

Eine momentane Masse des Treibmittels, die vom Polymergranulat 110 absorbiert wurde, $\Delta m$, kann auf einfache Weise mit der Beziehung

$$\Delta m = m_1 - m_2$$

berechnet werden.
In einer Ausführungsform des erfindungsgemäßen Verfahrens kann die momentane Masse des Treibmittels, die vom Polymergranulat absorbiert wurde, $\Delta m$, mithilfe einer speicherprogrammierbaren Steuerung bestimmt werden, insbesondere dynamisch bestimmt werden. Insbesondere kann die speicherprogrammierbare Steuerung die momentane Masse $\Delta m$ aus Druckmessungen und Temperaturmessungen der Anfangsgrößen und der momentanen Größen ($p_1$, $p_2$, $T_1$, $T_2$) berechnen, die von dem mindestens einen Drucksensor 210 und dem mindestens einen Temperatursensor 200 zur Verfügung gestellt werden können.

Wenn der bestimmte Wert der momentanen Masse $\Delta m$ der Zielsetzung entspricht, kann der Prozess des Imprägnierens beendet werden.

Für den Fall, dass für 100kg Polymergranulat 100 die Zielsetzung ein Grad der Beladung von 2% ist, kann das Imprägnieren beendet werden, wenn $\Delta m$ = 2kg erreicht ist.

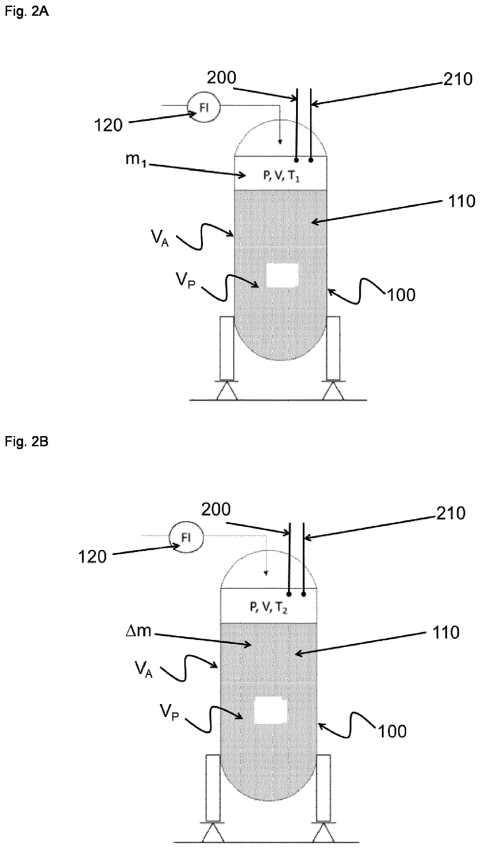

Die Figuren 2A und 2B veranschaulichen eine Variante des erfindungsgemäßen Verfahrens, bei der eine initiale Menge Treibgas $m_1$, beispielsweise $CO_2$, in einen Druckbehälter 100 eingeleitet wurde, in dem ein Polymergranulat 110 angeordnet ist, und kontinuierlich zusätzliches Treibmittel $\Delta m_a$ in den Druckbehälter 100 nachgefüllt wird, so dass der Druck im Innenraum des Druckbehälters konstant bleibt, d. h., dass der momentane Druck $p_2$ gleich dem Anfangsdruck $p_1$ ist. Dabei zeigt Fig. 2A den Zustand vor dem Beginn des Imprägnierens (Anfangsbedingung) und Fig. 2B den Zustand während des Imprägnierens.

Wie in dem in Figuren 1A und 1B beschriebenen Verfahren wird ein Treibmittel in den Innenraum eines Druckbehälters 100 gefüllt und die Masse des initialen Treibmittels $m_1$, die Anfangstemperatur $T_1$, der Anfangsdruck $p_1$ und das Volumen V des Treibgases im Innenraum des Druckbehälters 100 bestimmt.

Während des Imprägnierens können die momentane Temperatur $T_2$ und der momentane Druck $p_2$ mithilfe mindestens eines geeigneten Sensors 200, 210 im Innenraum des Druckbehälters 100 gemessen werden.

Während des Imprägnierens kann zusätzliches Treibmittel mit einer Masse $\Delta m_a$ in den Innenraum des Druckbehälters 100 nachgefüllt werden.

In einer Ausführungsform des Verfahrens kann Treibmittel in regelmäßigen Abständen in den Innenraum des Druckbehälters 100 nachgefüllt werden, wenn eine Differenz zwischen dem Anfangsdruck $p_1$ und dem momentanen Druck $p_2$ betragsmäßig größer ist als 0,5 bar. In einer alternativen Ausführungsform kann zusätzliches Treibmittel nachgefüllt werden, wenn die eine Differenz zwischen dem Anfangsdruck $p_1$ und dem momentanen Druck $p_2$ betragsmäßig größer ist als 0,3 bar, insbesondere größer ist als 0,1 bar.

In einer alternativen Ausführungsform kann kontinuierlich zusätzliches Treibmittel in den Innenraum des Druckbehälters 100 nachgefüllt werden, insbesondere unter Verwendung eines Druckreglers.

Das Nachfüllen des zusätzlichen Treibmittels kann insbesondere mithilfe einer speicherprogrammierbaren Steuerung kontrolliert werden.

Gemäß einer Ausführungsform des Verfahrens kann die Masse $\Delta m_a$ des zusätzlich nachgefüllten Treibmittels mithilfe eines Massendurchflussmessers 120 gemessen werden. Dabei kann sich die Masse $\Delta m_a$ des zusätzlich nachgefüllten Treibmittels aus einer Vielzahl Teilmassen zusammensetzen, wobei eine Teilmasse der Vielzahl der Teilmassen zu einer bestimmten Zeit t in den Innenraum des Druckbehälters 100 eingeleitet werden kann. Mittels einer speicherprogrammierbaren Steuerung kann die Masse $\Delta m_a$ des zusätzlich nachgefüllten Treibmittels bestimmt werden, insbesondere aus der Summe der Vielzahl von Teilmassen. Wenn die Masse $\Delta m_a$ des zusätzlich nachgefüllten Treibmittels die Zielsetzung erreicht hat, kann der Prozess des Imprägnierens beendet werden. In einer erfindungsgemäßen Ausführungsform des Verfahrens kann der Prozess des Imprägnierens automatisch beendet werden, wenn die Zielsetzung erreicht ist.

In einer alternativen Ausführungsform kann die Masse $\Delta m_a$ des zusätzlich nachgefüllten Treibmittels durch eine Bestimmung einer Gesamtmasse bestimmt werden. Die Gesamtmasse kann bestimmt werden unter Verwendung einer Masse des Druckbehälters sowie einer Masse des im Druckbehälter angeordneten Polymergranulates sowie einer Masse des im Druckbehälter befindlichen Treibgases. Die Gesamtmasse kann beispielsweise mittels einer Waage oder eine Wägezelle bestimmt werden. Die Gesamtmasse kann vor dem Beginn des Imprägnierens bestimmt werden, diese wird auch als Anfangsgesamtmasse bezeichnet. Ferner kann eine momentane Gesamtmasse bestimmt werden und eine Differenz zwischen der momentanen Gesamtmasse und der Anfangsgesamtmasse bestimmt, insbesondere berechnet, werden.

Die durch das Polymergranulat-absorbierte Masse des Treibmittels $\Delta m$ kann bestimmt werden gemäß der Beziehung: $\Delta m = \Delta m_a - \Delta m_b$,
wobei $\Delta m_a$ die Masse des zusätzlich nachgefüllten Treibmittels ist und $\Delta m_b$ eine Änderung der Masse des im Innenraum des Druckbehälters 100 angeordneten nicht-absorbierten Treibmittels in Abhängigkeit der Anfangstemperatur $T_1$ und der momentanen Temperatur $T_2$ beschreibt. Das bedeutet mit anderen Worten, dass $\Delta m_b$ den Effekt der Temperatur auf das nicht-gebundene Treibmittel im Innenraum des Druckbehälters 100 beschreibt.

Aus der idealen Gasgleichung ergibt sich, dass sich die Änderung der Masse des nicht-absorbierten Treibmittels im Innenraum des Druckbehälters $\Delta m_b$ bei konstantem Druck (d.h. $p_1 = p_2$) gemäß der folgenden Beziehung verhält:

$$\Delta m_b = \frac{p_1 \cdot V}{R_s} \cdot \left( \frac{1}{T_2} - \frac{1}{T_1} \right)$$

wobei $m_1$ die initial in den Innenraum des Druckbehälters eingeleitete Masse des Treibmittels ist und wobei $T_1$ und $T_2$ die Anfangstemperatur und die momentane Temperatur sind. Genauere Ergebnisse lassen sich durch eine Berechnung unter Zuhilfenahme von Realgasfaktoren erzielen, was aber wenig praxisrelevant ist.

In einem Fall, in dem während des Prozesses des Imprägnierens die momentane Temperatur $T_2$ im Vergleich zur Anfangstemperatur $T_1$ sinkt, d.h. $T_1 > T_2$, nimmt $\Delta m_b$ einen positiven Wert an. Damit ist weniger Treibmittel vom Polymergranulat absorbiert worden als es ein Anstieg der Gesamtmasse andeuten würde.

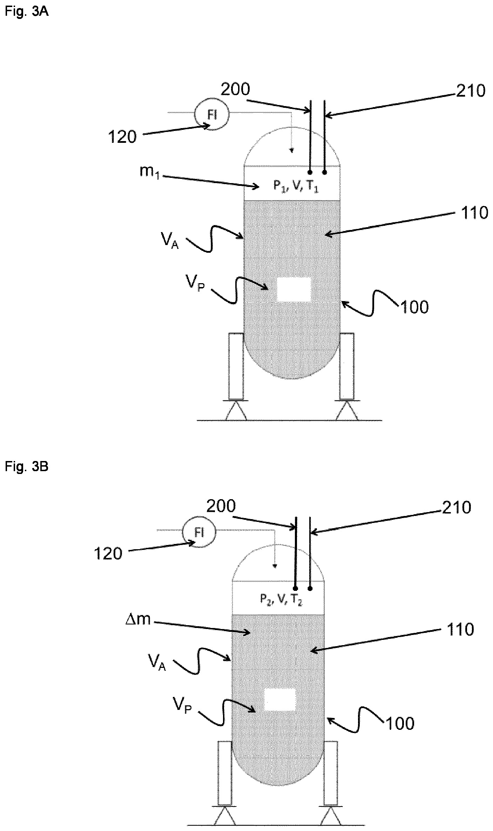

In einer alternativen Ausführungsform des Verfahrens (Fig. 3A und 3B) wird wie bei den zuvor beschriebenen Verfahren Polymergranulat und eine initiale Masse $m_1$ eines Treibmittels in dem Innenraum eines Druckbehälters 100 positioniert bzw. eingeleitet. Die initiale Masse $m_1$ sowie Anfangsdruck $p_1$ und Anfangstemperatur $T_1$ können bestimmt werden.

Während des Prozesses des Imprägnierens können die Gesamtmasse sowie die momentane Temperatur $T_2$ und der momentane Druck $p_2$ bestimmt werden. Es kann zusätzliches Treibmittel $\Delta m_a$ in den Innenraum des Druckbehälters 100 eingeleitet werden, wobei eine derartige Masse $\Delta m_a$ des zusätzlichen Treibmittels derart eingeleitet wird, dass nach dem zusätzlichen Einleiten der momentane Druck $p_2$ verschieden vom Anfangsdruck $p_1$ ist. Das bedeutet, dass der Druck um einen vordefinierten Wert absinken kann, ohne das dem mit einem Nachfüllen des Treibmittels entgegengewirkt wird. Wenn der momentane Druck $p_2$ weiter sinkt, insbesondere unterhalb eines vordefinierten Schwellenwertes, kann zusätzliches Treibmittel eingeleitet werden. Somit kann entgegengewirkt werden, dass eine Effizienz des Imprägnierens sinkt. Beispielsweise könnte bei einem zu geringen momentanen Druck $p_2$ das Imprägnieren länger dauern als bei einem höheren momentanen Druck $p_2$.

Der Vorteil dieses Verfahrens könnte sein, dass die Masse des nicht-absorbierten Treibmittels $m_2$, die nach dem Imprägnieren verloren geht, reduziert werden könnte im Vergleich zum Verfahren, bei dem zusätzliches Treibmittel zugeführt wird damit der momentane Druck $p_2$ gleich dem Anfangsdruck $p_1$ ist.

**Patentansprüche**

1. Verfahren zum Imprägnieren eines Polymergranulates (110) mit einer vordefinierten Masse eines gasförmigen Treibmittels, wobei

   - das Polymergranulat (110) in einem Innenraum eines Druckbehälters (100) angeordnet wird,
   - ein gasförmiges Treibmittel initial in den Innenraum des Druckbehälters (100) eingeleitet wird, wobei Treibmittel vom Polymergranulat (110) absorbiert wird und ein im Innenraum herrschender momentaner Druck ($p_2$) gemessen wird

   **dadurch gekennzeichnet, dass** eine momentane Masse ($\Delta m$) des durch das Polymergranulat absorbierten Treibmittels als Differenz der Masse ($m_1$) des insgesamt initial in den Innenraum des Druckbehälters eingeleiteten Treibmittels und der Masse ($m_2$) eines momentan im Innenraum befindlichen nicht-absorbierten Teils des Treibmittels bestimmt wird, und wobei das Verfahren abgebrochen wird, wenn die momentane Masse ($\Delta m$) des absorbierten Treibmittels größer oder gleich der vordefinierten Masse ist.

2. Verfahren nach Anspruch 1, **dadurch gekennzeichnet, dass** eine momentane Temperatur ($T_2$) im Innenraum des Druckbehälters (100) gemessen wird.

3. Verfahren nach einem der Ansprüche 1 oder 2, **dadurch gekennzeichnet, dass** die momentane Masse ($\Delta m$) mittels einer speicherprogrammierbaren Steuerung bestimmt wird.

4. Verfahren nach einem der Ansprüche 1 bis 3, **dadurch gekennzeichnet, dass** die Masse des momentan im Innenraum befindlichen nicht-absorbierten Teils des Treibmittels ($m_2$) mittels der Beziehung:

$$m_2 = \frac{p_2 \cdot V}{R_s \cdot T_2}$$

bestimmt wird, wobei

$p_2$ und $T_2$ der momentane Druck und die momentane Temperatur im Innenraum des Druckbehälters sind, $R_s$ die spezifische Gaskonstante des im Druckbehälter vorhandenen Gases oder Gasgemisches und V das nicht vom Polymergranulat eingenommene Behältervolumen.

5. Verfahren zum Imprägnieren eines Polymergranulates mit einer vordefinierten Masse eines gasförmigen Treibmittels, wobei

   - das Polymergranulat (110) in einem Innenraum eines Druckbehälters (100) angeordnet wird,
   - ein gasförmiges Treibmittel initial in den Innenraum des Druckbehälters (100) eingeleitet wird, so dass Treibmittel vom Polymergranulat (110) absorbiert wird, und wobei hiernach nachträglich Treibmittel in den Innenraum des Druckbehälters (100) nachgefüllt wird, **dadurch gekennzeichnet, dass** die Massen des initial ($m_1$) und des nachträglich eingeleiteten Treibmittels ($\Delta m_a$) bestimmt werden

   und dass eine momentane Masse ($\Delta m$) des durch das Polymergranulat absorbierten Treibmittels unter Verwendung der Massen des initial ($m_1$) und nachträglich ($\Delta m_a$) in den Innenraum eingeleiteten Treibmittels bestimmt wird, und wobei das Verfahren abgebrochen wird, wenn die momentane Masse ($\Delta m$) des absorbierten Treibmittels größer oder gleich der vordefinierten Masse ist.

6. Verfahren nach Anspruch 5, **dadurch gekennzeichnet, dass** eine momentane Temperatur ($T_2$) im Innenraum des Druckbehälters (100) gemessen wird.

7. Verfahren nach Anspruch 5 oder 6, **dadurch gekennzeichnet, dass** der im Innenraum des Druckbehälters (100) herrschende momentane Druck ($p_2$) gemessen wird und das jeweils nachträglich eingeleitete Treibmittel kontinuierlich in den Innenraum des Druckbehälters (100) eingeleitet wird, so dass der im Innenraum des Druckbehälters (100) herrschende Druck konstant bleibt.

8. Verfahren nach einem der Ansprüche 5 bis 7, **dadurch gekennzeichnet, dass** die momentane Masse ($\Delta m$) des durch das Polymergranulat (110) absorbierten Treibmittels mittels der Beziehung

$$\Delta m_b = \Delta m_a - \frac{p_1 \cdot V}{R_s} \cdot \left( \frac{1}{T_2} - \frac{1}{T_1} \right)$$

bestimmt wird, wobei $m_1$ und $\Delta m_a$ die Massen des initial und des nachträglich in den Innenraum des Druckbehälters (100) eingeleiteten Treibmittels sind, wobei $T_1$ eine im Innenraum des Druckbehälters (100) vor der Absorption des Treibmittels herrschende Anfangstemperatur ist und wobei $T_2$ die momentane Temperatur im Innenraum des Druckbehälters, V das nicht vom Polymergranulat eingenommene Volumen des Druckbehälters, $R_s$ die spezifische Gaskonstante des im Behälter befindlichen Gases und $p_1$ der konstante Druck im Druckbehälter ist.

9. Verfahren nach einem der Ansprüche 5 bis 8, wobei der im Innenraum des Druckbehälters (100) herrschende momentane Druck ($p_2$) gemessen wird, und wobei die momentane Masse ($\Delta m$) des durch das Polymergranulat absorbierten Treibmittels unter Verwendung der Massen des initial ($m_1$) und nachträglich ($\Delta m_a$) in den Innenraum eingeleiteten Treibmittels und des momentanen Drucks ($p_2$) bestimmt wird, und wobei das Verfahren abgebrochen wird, wenn die momentane Masse ($\Delta m$) des absorbierten Treibmittels größer oder gleich der vordefinierten Masse ist.

10. Verfahren nach Anspruch 9, **dadurch gekennzeichnet, dass** die momentane Masse ($\Delta m$) des durch das Polymergranulat (110) absorbierten Treibmittels mittels der Beziehung

$$\Delta m_b = \Delta m_a - \frac{V}{R_s} \cdot \left( \frac{p_2}{T_2} - \frac{p_1}{T_1} \right)$$

bestimmt wird, wobei $m_1$ und $\Delta m_a$ die Massen des initial und des nachträglich in den Innenraum des Druckbehälters (100) eingeleiteten Treibmittels sind, $p_1$ und $T_1$ ein im Innenraum vor der Absorption des Treibmittels herrschender Anfangsdruck und eine im Innenraum des Druckbehälters (100) vor der Absorption des Treibmittels herrschende Anfangstemperatur sind, und wobei $p_2$ und T2 der momentane Druck und die momentane Temperatur im Innenraum des Druckbehälters (100), V das nicht vom Polymergranulat eingenommene Volumen des Druckbehälters, $R_s$ die spezifische Gaskonstante des im Behälter befindlichen Gases sind.

**11.** Verfahren nach einem der vorherigen Ansprüche, **dadurch gekennzeichnet, dass**

- die Masse ($m_1$) des initial in den Innenraum des Druckbehälters eingeleiteten Treibmittels, oder
- die Masse ($\Delta m_a$) des nachträglich in den Innenraum des Druckbehälters (100) eingeleiteten Treibmittels, oder
- die Massen ($m_1$, $\Delta m_a$) des initial und nachträglich in den Innenraum des Druckbehälters (100) eingeleiteten Treibmittels

beim Einleiten des Treibmittels in den Innenraum des Druckbehälters (100) mittels eines Massendurchflussmessers (120) bestimmt werden.

**12.** Verfahren nach einem der vorherigen Ansprüche, **dadurch gekennzeichnet, dass**

- die Masse ($m_1$) des initial in den Innenraum des Druckbehälters eingeleiteten Treibmittels, oder
- die Masse ($\Delta m_a$) des nachträglich in den Innenraum des Druckbehälters (100) eingeleiteten Treibmittels, oder
- die Massen ($m_1$, $\Delta m_a$) des initial und nachträglich in den Innenraum des Druckbehälters (100) eingeleiteten Treibmittels oder
- die Masse des in dem Druckbehälter (100) angeordneten Polymergranulats mittels einer Waage, einer Wägezelle oder eines Kraftaufnehmers bestimmt werden.

**13.** Verfahren nach einem der vorherigen Ansprüche, **dadurch gekennzeichnet, dass** das gasförmige Treibmittel einer der folgenden gasförmigen Stoffe ist oder zumindest einen der folgenden Stoffe aufweist: Kohlendioxid ($CO_2$), Stickstoff (N2), Argon (Ar), Helium (He), ein Kohlenwasserstoff, Butan, Pentan, Mischungen eines oder mehrerer Gase mit $CO_2$.

**14.** Verfahren nach einem der vorherigen Ansprüche, **dadurch gekennzeichnet, dass** das Polymergranulat (110) zumindest einen der folgenden Stoffe aufweist oder durch einen der folgenden Stoffe gebildet ist: einen thermoplastischen Kunststoff, einen duroplastischen Kunststoff, einen thermoplastischen Partikelschaum, ein Granulat zur Herstellung eines thermoplastischen Partikelschaumes, Polypropylen, expandiertes Polypropylen (EPP), Polystyrol, expandiertes Polystyrol (EPS).

**15.** Verfahren nach einem der vorherigen Ansprüche, **dadurch gekennzeichnet, dass** zum Beenden des Imprägnierens des Polymergranulates mit dem Treibmittel der im Innenraum des Druckbehälters (100) herrschende Druck abgesenkt wird auf:

- einen Umgebungsdruck, wobei insbesondere die aus dem Polymergranulat aufgrund der Druckabsenkung wieder freiwerdende Menge an Treibmittel gravimetrisch bestimmt wird, oder
- einen Druck, der höher als ein Umgebungsdruck ist und bei dem insbesondere das Polymergranulat weder weiteres Treibmittel absorbiert noch verliert.

**Claims**

**1.** A method for impregnating a polymer granulate (110) with a predefined mass of a gaseous blowing agent, wherein

- the polymer granulate (110) is arranged in an interior space of a pressure vessel (100),
- a gaseous blowing agent is initially introduced into the interior space of the pressure vessel (100), wherein blowing agent is absorbed by the polymer granulate (110) and an instantaneous pressure ($p_2$) prevailing in the interior space is measured, **characterized in that** an instantaneous mass ($\Delta m$) of the blowing agent absorbed by the polymer granulate is determined as the difference between the total mass (mi) of the blowing agent initially introduced into the interior space of the pressure vessel and the mass ($m_2$) of a non-absorbed part of the blowing agent located in the interior space at the moment, and wherein the method is stopped when the instantaneous mass ($\Delta m$) of the absorbed blowing agent is greater than or equal to the predefined mass.

**2.** The method according to claim 1, **characterized in that** an instantaneous temperature ($T_2$) is measured in the interior space of the pressure vessel (100).

**3.** The method according to one of claims 1 or 2, **characterized in that** the instantaneous mass ($\Delta m$) is determined by means of a programmable logic controller.

4. The method according to one of claims 1 to 3, **characterized in that** the mass of the non-absorbed part of the blowing agent ($m_2$) located in the interior space at the moment is determined by means of the relationship:

$$m_2 = \frac{p_2 \cdot V}{R_s \cdot T_2}$$

wherein
$p_2$ and $T_2$ are the instantaneous pressure and the instantaneous temperature in the interior space of the pressure vessel, $R_s$ is the specific gas constant of the gas or gas mixture present in the pressure vessel, and V is the vessel volume not occupied by the polymer granulate.

5. A method for impregnating a polymer granulate with a predefined mass of a gaseous blowing agent, wherein

- the polymer granulate (110) is arranged in an interior space of a pressure vessel (100),
- a gaseous blowing agent is initially introduced into the interior space of the pressure vessel (100) so that blowing agent is absorbed by the polymer granulate (110), and wherein after that, blowing agent is subsequently refilled into the interior space of the pressure vessel (100), **characterized in that** the masses of the blowing agent introduced initially (mi) and subsequently ($\Delta m_a$) are determined, and **in that**
- an instantaneous mass ($\Delta m$) of the blowing agent absorbed by the polymer granulate is determined using the masses of the blowing agent initially (mi) and subsequently ($\Delta m_a$) introduced into the interior space, and wherein the method is stopped when the instantaneous mass ($\Delta m$) of the absorbed blowing agent is greater than or equal to the predefined mass.

6. The method according to claim 5, **characterized in that** an instantaneous temperature ($T_2$) is measured in the interior space of the pressure vessel (100).

7. The method according to claim 5 or 6, **characterized in that** the instantaneous pressure ($p_2$) prevailing in the interior space of the pressure vessel (100) is measured and the subsequently introduced blowing agent is introduced continuously into the interior space of the pressure vessel (100) in each case so that the pressure prevailing in the interior space of the pressure vessel (100) remains constant.

8. The method according to one of claims 5 to 7, **characterized in that** the instantaneous mass ($\Delta m$) of the blowing agent absorbed by the polymer granulate (110) is determined by means of the relationship

$$\Delta m_b = \Delta m_a - \frac{p_1 \cdot V}{R_s} \cdot \left(\frac{1}{T_2} - \frac{1}{T_1}\right)$$

wherein $m_1$ and $\Delta m_a$ are the masses of the blowing agent introduced initially and subsequently into the interior space of the pressure vessel (100), wherein $T_1$ is an initial temperature prevailing in the interior space of the pressure vessel (100) before the absorption of the blowing agent, and wherein $T_2$ is the instantaneous temperature in the interior space of the pressure vessel, V is the volume of the pressure vessel not occupied by the polymer granulate, $R_s$ is the specific gas constant of the gas located in the vessel, and $p_1$ is the constant pressure in the pressure vessel.

9. The method according to one of claims 5 to 8, wherein the instantaneous pressure ($p_2$) prevailing in the interior space of the pressure vessel (100) is measured, and wherein the instantaneous mass ($\Delta m$) of the blowing agent absorbed by the polymer granulate is determined using the masses of the blowing agent initially ($m_1$) and subsequently ($\Delta m_a$) introduced into the interior space and the instantaneous pressure ($p_2$), and wherein the method is stopped when the instantaneous mass ($\Delta m$) of the absorbed blowing agent is greater than or equal to the predefined mass.

10. The method according to claim 9, **characterized in that** the instantaneous mass ($\Delta m$) of the blowing agent absorbed by the polymer granulate (110) is determined by means of the relationship

$$\Delta m_b = \Delta m_a - \frac{V}{R_s} \cdot \left(\frac{p_2}{T_2} - \frac{p_1}{T_1}\right)$$

wherein $m_1$ and $\Delta m_a$ are the masses of the blowing agent initially and subsequently introduced into the interior space of the pressure vessel (100), $p_1$ and $T_1$ are an initial pressure prevailing in the interior space before the absorption of the blowing agent and an initial temperature prevailing in the interior space of the pressure vessel (100) before the absorption of the blowing agent, and wherein $p_2$ and $T_2$ are the instantaneous pressure and the instantaneous temperature in the interior space of the pressure vessel (100), V is the volume of the pressure vessel not occupied by the polymer granulate, $R_s$ is the specific gas constant of the gas located in the container.

11. The method according to one of the preceding claims, **characterized in that**

- the mass ($m_1$) of the blowing agent initially introduced into the interior space of the pressure vessel, or
- the mass ($\Delta m_a$) of the blowing agent subsequently introduced into the interior space of the pressure vessel (100), or
- the masses ($m_1$, $\Delta m_a$) of the blowing agent initially and subsequently introduced into the interior space of the pressure vessel (100)

are determined by means of a mass flow meter (120) when the blowing agent is introduced into the interior space of the pressure vessel (100).

12. The method according to one of the preceding claims, **characterized in that**

- the mass ($m_1$) of the blowing agent initially introduced into the interior space of the pressure vessel, or
- the mass ($\Delta m_a$) of the blowing agent subsequently introduced into the interior space of the pressure vessel (100), or
- the masses ($m_1$, $\Delta m_a$) of the blowing agent introduced initially and subsequently into the interior space of the pressure vessel (100), or
- the mass of the polymer granulate arranged in the pressure vessel (100) are determined by means of a balance, a load cell, or a force transducer.

13. The method according to one of the preceding claims, **characterized in that** the gaseous blowing agent is one of the following gaseous substances or comprises at least one of the following substances: carbon dioxide ($CO_2$), nitrogen ($N_2$), argon (Ar), helium (He), a hydrocarbon, butane, pentane, mixtures of one or more gases with $CO_2$.

14. The method according to one of the preceding claims, **characterized in that** the polymer granulate (110) comprises at least one of the following substances or is formed by one of the following substances: a thermoplastic polymer, a thermosetting plastic, a thermoplastic particle foam, a granulate for producing a thermoplastic particle foam, polypropylene, expanded polypropylene (EPP), polystyrene, expanded polystyrene (EPS).

15. The method according to one of the preceding claims, **characterized in that,** in order to end the impregnation of the polymer granulate with the blowing agent, the pressure prevailing in the interior space of the pressure vessel (100) is reduced to:

- an ambient pressure, wherein in particular the amount of blowing agent released again from the polymer granulate due to the pressure reduction is determined gravimetrically, or
- a pressure which is higher than an ambient pressure and at which, in particular, the polymer granulate does not absorb nor lose any further blowing agent.

**Revendications**

1. Procédé pour l'imprégnation d'un granulat de polymère (110) avec une masse prédéfinie d'un agent propulseur gazeux, dans lequel

- le granulat de polymère (110) est disposé dans un espace interne d'un récipient sous pression (100),
- un agent propulseur gazeux est introduit initialement dans l'espace interne du récipient sous pression (100), l'agent propulseur étant absorbé par le granulat de polymère (110) et une pression momentanée ($p_2$) régnant dans l'espace interne étant mesurée, **caractérisé en ce qu'**une masse momentanée ($\Delta m$) de l'agent propulseur absorbé par le granulat de polymère est déterminée comme la différence entre la masse ($m_1$) de l'agent propulseur initial total introduit dans l'espace interne du récipient sous pression et de la masse ($m_2$) d'une partie

non absorbée de l'agent propulseur se trouvant momentanément dans l'espace interne, et le procédé étant interrompu lorsque la masse momentanée ($\Delta$m) de l'agent propulseur absorbé est supérieure ou égale à la masse prédéfinie.

2. Procédé selon la revendication 1, **caractérisé en ce qu'**une température momentanée ($T_2$) est mesurée dans l'espace interne du récipient sous pression (100).

3. Procédé selon l'une quelconque des revendications 1 ou 2, **caractérisé en ce que** la masse momentanée ($\Delta$m) est déterminée au moyen d'une commande à mémoire programmable.

4. Procédé selon l'une quelconque des revendications 1 à 3, **caractérisé en ce que** la masse ($m_2$) de la partie non absorbée de l'agent propulseur se trouvant momentanément dans l'espace interne est déterminée au moyen de la relation :

$$m_2 = \frac{p_2 \cdot V}{R_s \cdot T_2}$$

, dans laquelle

$p_2$ et $T_2$ désignent la pression momentanée et la température momentanée dans l'espace interne du récipient sous pression, Rs désigne la constante des gaz spécifique pour le gaz ou le mélange de gaz présent dans le récipient sous pression et V désigne le volume du récipient qui n'est pas occupé par le granulat de polymère.

5. Procédé pour l'imprégnation d'un granulat de polymère avec une masse prédéfinie d'un agent propulseur gazeux, dans lequel

- le granulat de polymère (110) est disposé dans un espace interne d'un récipient sous pression (100),
- un agent propulseur gazeux est introduit initialement dans l'espace interne du récipient sous pression (100), de sorte que l'agent propulseur soit absorbé par le granulat de polymère (110), et l'agent propulseur étant rempli de nouveau dans l'espace interne du récipient sous pression (100), **caractérisé en ce que** les masses de l'agent propulseur introduit initialement ($m_1$) et ultérieurement ($\Delta m_a$) sont déterminées et **en ce que**
- une masse momentanée ($\Delta$m) de l'agent propulseur absorbé par le granulat de polymère est déterminée en utilisant les masses de l'agent propulseur introduit initialement ($m_1$) et ultérieurement ($\Delta m_a$) dans l'espace interne, et le procédé étant interrompu lorsque la masse momentanée ($\Delta$m) de l'agent propulseur absorbé est supérieure ou égale à la masse prédéfinie.

6. Procédé selon la revendication 5, **caractérisé en ce qu'**une température momentanée ($T_2$) est mesurée dans l'espace interne du récipient sous pression (100).

7. Procédé selon la revendication 5 ou 6, **caractérisé en ce que** la pression momentanée ($p_2$) régnant dans l'espace interne du récipient sous pression (100) est mesurée et l'agent propulseur introduit respectivement ultérieurement est introduit de manière continue dans l'espace interne du récipient sous pression (100), de sorte que la pression régnant dans l'espace interne du récipient sous pression (100) reste constante.

8. Procédé selon l'une quelconque des revendications 5 à 7, **caractérisé en ce que** la masse momentanée ($\Delta$m) de l'agent propulseur absorbé par le granulat de polymère (110) est déterminée au moyen de la relation

$$\Delta m_b = \Delta m_a - \frac{p_1 \cdot V}{R_s} \cdot \left( \frac{1}{T_2} - \frac{1}{T_1} \right)$$

, dans laquelle $m_1$ et $\Delta m_a$ désignent les masses de l'agent propulseur introduit initialement et introduit ultérieurement dans l'espace interne du récipient sous pression (100), dans laquelle $T_1$ désigne une température initiale régnant dans l'espace interne du récipient sous pression (100) avant l'absorption de l'agent propulseur et dans laquelle $T_2$ désigne la température momentanée dans l'espace interne du récipient sous pression, V désigne le volume du récipient sous pression non occupé par le granulat de polymère, Rs désigne la constante de gaz spécifique du gaz se trouvant dans le récipient et $p_1$ est la pression constante dans le récipient sous pression.

**9.** Procédé selon l'une quelconque des revendications 5 à 8, dans lequel la pression momentanée ($p_2$) régnant dans l'espace interne du récipient sous pression (100) est mesurée, et dans lequel la masse momentanée ($\Delta m$) de l'agent propulseur absorbé par le granulat de polymère est déterminée en utilisant les masses de l'agent propulseur introduit initialement ($m_1$) et ultérieurement ($\Delta m_a$) dans l'espace interne et la pression momentanée ($p_2$) est déterminée, et dans lequel le procédé est interrompu lorsque la masse momentanée ($\Delta m$) de l'agent propulseur absorbé est supérieure ou égale à la masse prédéfinie.

**10.** Procédé selon la revendication 9, **caractérisé en ce que** la masse momentanée ($\Delta m$) de l'agent propulseur absorbé par le granulat de polymère (110) est déterminée au moyen de la relation

$$\Delta m_b = \Delta m_a - \frac{V}{R_s} \cdot \left( \frac{p_2}{T_2} - \frac{p_1}{T_1} \right)$$

, dans laquelle $m_1$ et $\Delta m_a$ sont les masses de l'agent propulseur introduit initialement et introduit ultérieurement dans l'espace interne du récipient sous pression (100), $p_1$ et $T_1$ désignent une pression initiale régnant dans l'espace interne avant l'absorption de l'agent propulseur et une température initiale régnant dans l'espace interne du récipient sous pression (100) avant l'absorption de l'agent propulseur, et dans laquelle $p_2$ et $T_2$ désignent la pression momentanée et la température momentanée dans l'espace interne du récipient sous pression (100), V désigne le volume du récipient sous pression non occupé par le granulat de polymère, Rs désigne la constante de gaz spécifique du gaz se trouvant dans le récipient.

**11.** Procédé selon l'une quelconque des revendications précédentes, **caractérisé en ce que**

   - la masse ($m_1$) de l'agent propulseur introduit initialement dans l'espace interne du récipient sous pression, ou
   - la masse ($\Delta m_a$) de l'agent propulseur introduit ultérieurement dans l'espace interne du récipient sous pression (100), ou
   - les masses ($m_1$, $\Delta m_a$) de l'agent propulseur introduit initialement et ultérieurement dans l'espace interne du récipient sous pression (100)

sont déterminées au moyen d'un débitmètre massique (120) lors de l'introduction de l'agent propulseur dans l'espace interne du récipient sous pression (100).

**12.** Procédé selon l'une quelconque des revendications précédentes, **caractérisé en ce que**

   - la masse ($m_1$) de l'agent propulseur introduit initialement dans l'espace interne du récipient sous pression, ou
   - la masse ($\Delta m_a$) de l'agent propulseur introduit ultérieurement dans l'espace interne du récipient sous pression (100), ou
   - les masses ($m_1$, $\Delta m_a$) de l'agent propulseur introduit initialement et ultérieurement dans l'espace interne du récipient sous pression (100), ou
   - la masse du granulat de polymère disposé dans le récipient sous pression (100) sont déterminées au moyen d'une balance, d'une cellule de pesage ou d'un capteur de force.

**13.** Procédé selon l'une quelconque des revendications précédentes, **caractérisé en ce que** l'agent propulseur gazeux est l'une des substances gazeuses suivantes ou présente au moins l'une des substances gazeuses suivantes : du dioxyde de carbone ($CO_2$), de l'azote ($N_2$), de l'argon (Ar), de l'hélium (He), un hydrocarbure, du butane, du pentane, des mélanges d'un ou de plusieurs gaz avec du $CO_2$.

**14.** Procédé selon l'une quelconque des revendications précédentes, **caractérisé en ce que** le granulat de polymère (110) présente au moins l'une des substances suivantes ou est formé par l'une des substances suivantes : une matière plastique thermoplastique, une matière plastique thermodurcissable, une mousse à particules thermoplastique, un granulat pour la production d'une mousse à particules thermoplastique, du polypropylène, du polypropylène expansé (EPP), du polystyrène, du polystyrène expansé (EPS).

**15.** Procédé selon l'une quelconque des revendications précédentes, **caractérisé en ce que,** pour terminer l'imprégnation du granulat de polymère avec l'agent propulseur, la pression régnante dans l'espace interne du récipient sous pression (100) est baissée à :

- une pression ambiante, la quantité d'agent propulseur de nouveau libérée du granulat de polymère en raison de la baisse de pression étant en particulier déterminée par gravimétrie, ou

- une pression qui est supérieure à une pression ambiante et à laquelle en particulier le granulat de polymère n'absorbe ni ne perd de l'agent propulseur.

Fig. 1A

Fig. 1B

Fig. 2A

Fig. 2B

Fig. 3A

Fig. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017220671 A1